# EUROPÄISCHE PATENTSCHRIFT

(11) **EP 2 565 062 B1**
(45) Veröffentlichungstag und Bekanntmachung des Hinweises auf die Patenterteilung: **20.11.2013**
(21) Anmeldenummer: 12182452.8
(22) Anmeldetag: 30.08.2012
(51) Int. Cl.: B60D 1/167, B62K 27/12

(54) **Befestigungsvorrichtung**
Fastening device
Dispositif de fixation

(30) Priorität: 31.08.2011 DE 202011105188 U
(43) Veröffentlichungstag der Anmeldung: 06.03.2013
(73) Patentinhaber: Weber, Herbert, D-82354 Breitbrunn (DE)
(72) Erfinder: Weber, Herbert, D-82354 Breitbrunn (DE)
(74) Vertreter: Müller, Gerald Christian

(56) Entgegenhaltungen:
- CN-Y- 200 971 126
- DE-A1- 3 343 844
- DE-U1- 8 028 999
- DE-U1-202009 015 485
- US-A- 2 283 716
- US-A- 4 032 170
- US-A- 4 174 120
- US-A- 4 736 963
- US-A1- 2011 048 311

## Beschreibung

### I. Anwendungsgebiet

Die Erfindung betrifft das Problem der Befestigung eines Fahrradanhängers mittels einer Anhängerkupplung an einem Fahrrad.

### II. Technischer Hintergrund

Bei Fahrrädern, die über einen Gepäckträger verfügen, wird die Anhängerkupplung in der Regel am Gepäckträger befestigt, oder auch direkt am Rahmen des Fahrrades. Dabei besteht das Problem, dass die Gestaltung der Gepäckträger als auch der Rahmen der Fahrräder sehr unterschiedlich ist.

Bekannt sind Lösungen, bei welchen am Gepäckträger über z. B. eine Aufnahmeplatte verschiedene Anbauteile befestigt werden können. Dies verlangt jedoch in der Regel, dass Gepäckträger und Anbauteile vom gleichen Hersteller sind.

Bekannt sind auch Aufsatzadapter, in der Regel mit Klemmbefestigung, welche jedoch in der Positionierung sehr eingeschränkt sind und den Gepäckträger in seiner Funktion beeinträchtigen.

**Daneben ist aus der** CN 2009 71 126 Y **- die den nächstreichenden Stand der Technik darstellt - eine Befestigungsvorrichtung mit zwei Gestängeteilen bekannt, die zueinander verschiebbar sind. Dadurch kann die Montagehöhe des Gepäckträgers an das jeweilige Fahrrad angepasst werden. Eine Anhängekupplung im Zusammenhang mit diesem Gepäckträger ist nicht beschrieben.**

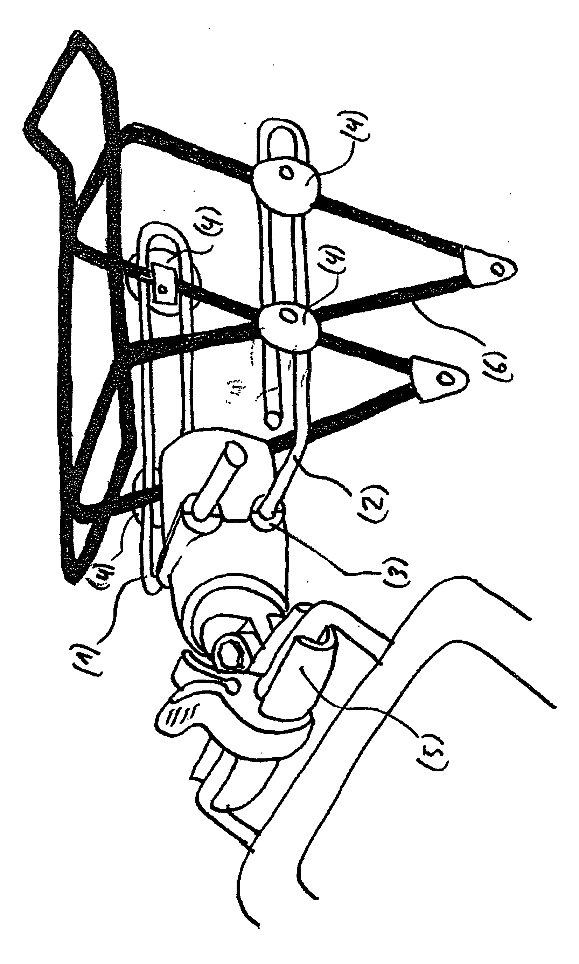

**Auch die** DE 33 43 844 A1 **beschreibt einen Fahrrad-Gepäckträger, bei dem, siehe beispielsweise Figur 3, zwei Gestängeteile zueinander verschiebbar in einem Klemmteil aufgenommen sind.**

**Daneben zeigen beispielsweise die** US 4032170 A**, die** US 2283716 A**, die** US 2011 048311 A1 **und die** US 4174120 A **Anhängerkupplungen, die eine Klemmeinheit umfassen.**

### II. Darstellung der Erfindung

### a) Aufgabenstellung

Zweck der Erfindung ist es daher, eine Befestigungsvorrichtung zu schaffen, mit der an möglichst vielen verschiedenen Bauformen von Gepäckträgern und Fahrrad-Rahmen eine Anhängerkupplung wie beschrieben angebracht werden kann.

### b) Lösung

Die Erfindung betrifft eine Befestigungsvorrichtung mit welcher an Fahrrad-Gepäckträgern ein Element befestigt werden kann, welches als Träger für eine Anhängerkupplung dient, aber den Gepäckträger und das Rücklicht nicht in seiner Funktion beeinträchtigt.

Eine Befestigungsvorrichtung, die zweiteilig ist, also insbesondere zwei Gestänge-Teile umfasst, kann an den Sattelstreben des Fahrrades und/oder dem Tragegestänge des Gepäckträgers angebracht werden.

Die beiden Gestängeteile werden mittels Klemmblöcken, welche verschiebbar an den Gestänge-Teilen angebracht sind, an den Sattelstreben des Fahrrades und/oder dem Tragegestänge des Gepäckträgers angebracht.

Die Verbindung der beiden Gestänge-Teile zueinander wird vorzugweise durch ein Klemmeinheit bewerkstelligt, welches vorzugsweise in der Anhängerkupplung integriert ist. Die beiden Gestänge-Teile sind dabei innerhalb der Klemmeinheit zueinander verschiebbar, wodurch der Abstand der Gestängeteile zueinander einstellbar ist.

Auch kann die horizontale Ausrichtung der Anhängerkupplung verändert werden, zum Beispiel indem die Gestängeteile auf der gewünschten Höhe am Gepäckträger oder an der Sattelstrebe des Fahrrades angebracht werden können.

Somit entsteht eine Lösung, bei der unabhängig von der Größe und Bauform des Fahrrades oder des Gepäckträgers die Positionierung einer Anhängerkupplung vorgenommen werden kann.

### c) Ausführungsbeispiel

Die Figur zeigt - ohne das zugehörige Fahrrad - dessen Gepäckträger 6, an dem eine Anhängerkupplung 5 zum Anhängen eines Fahrradanhängers, von dem nur der vordere Teil der Deichsel sichtbar ist, auf einer bestimmten Höhe bewerkstelligt werden soll.

Dass vertikal verlaufende Traggestänge des Gepäckträgers, an dem die Befestigung erfolgen soll, besteht aus nicht genau senkrecht, sondern schräg zur Senkrechten verlaufenden Trag-Streben, die somit in diesem Fall nach unten V-förmig aufeinander zu laufen und abhängig von der Höhe auf jeder Seite des Gepäckträgers einen anderen horizontalen Abstand zueinander besitzen.

Die Befestigungsvorrichtung besteht erfindungsgemäß zum einen aus der Klemmeinheit 3, die in der Anhängerkupplung 5 integriert ist, sowie aus den beiden Gestängeteilen 1 und 2.

Jedes der Gestängeteile 1,2 ist in der Aufsicht betrachtet L- förmig ausgebildet, mit einem langen, in Längsrichtung des Gepäckträgers verlaufenden Schenkel und einem kurzen, am hinteren Ende dieses langen Schenkels quer dazu stehenden, kurzen Schenkel.

Die beiden Gestängeteile 1, 2 sind mit ihren kurzen Schenkel von gegenüberliegenden Seiten aus in die Klemmeinheit 3 eingeführt und dort verklemmt, und können vor dem verklemmen in Querrichtung zur Längsrichtung des Gepäckträgers zueinander verschoben werden, wodurch der Abstand der langen Schenkel der Gestängeteile zueinander eingestellt wird. Dieser Abstand kann somit so eingestellt werden, dass der lange Schenkel der beiden Gestängeteile jeweils auf einer Seite an der Außenseite des Taggestänge des Gepäckträgers anliegt, und mit dessen Trag-Streben über Klemmblöcke 4 verbunden werden kann, indem jede Trag-Strebe des Traggstells des Gepäckträgers über einen Klemmblock 4 mit dem langen Schenkel je eines der Gestänge-Teile 1, 2 verbunden wird.

Der lange Schenkel jedes der beiden Gestängeteile 1, 2 besteht dabei aus zwei parallel verlaufenden Streben, die durch eine Umkehrbiegung am vorderen freien Ende dieses langen Schenkels geschaffen wird.

Der Abstand der beiden Streben sowie die Größe der Klemmblöcke 4 ist dabei so gewählt, dass jeder Klemmbock 4 außer mit einer Trag-Strebe des Gepäckträgers auch mit beiden Streben des langen Schenkels des Gestängeteiles 1 oder 2 in Eingriff steht, was eine erhöhte Stabilität der Verbindung ergibt.

## Patentansprüche

1. Befestigungsvorrichtung mit zwei Gestängeteilen (1) und (2), welche durch eine Klemmeinheit (3) verbunden sind
**wobei**
a) die Gestängeteile (1) und (2) innerhalb der Klemmeinheit (3) zueinander verschiebbar sind
**dadurch gekennzeichnet, dass**
b) durch **die Verschiebbarkeit** ihr Abstand zueinander an die die Befestigungsvorrichtung tragenden Teile angepasst werden kann,
c) die Gestängeteile (1) und (2) jeweils mit zwei parallel verlaufenden Streben versehen sind,
d) die zweite parallel verlaufende Strebe durch eine Umkehrbiegung geschaffen wird,
e) die Gestängeteile (1) und (2) jeweils mit an den Gestängeteilen (1, 2) verschiebbaren Klemmblöcken (4) versehen sind, welche jeweils in die Position geschoben werden können, welche zur sicheren Befestigung an einem Fahrradrahmen oder einem Gepäckträger (6) gefordert ist.

2. Befestigungsvorrichtung nach Anspruch 1
**dadurch gekennzeichnet, dass**
die Klemmeinheit (3) in eine Anhängerkupplung (5) integriert ist.

## Claims

1. An attachment device with two rod elements (1) and (2) which are connected by a clamping unit (3), wherein
a) the rod elements (1) and (2) are moveable in a linear manner relative to one another within the clamping unit (3), **characterized in that**
b) the linear movability facilitates adapting a distance of the rod elements from one another as a function of the elements supporting the attachment device;
c) the rod elements (1) and (2) are respectively provided with two struts extending in parallel,
d) the second parallel strut is provided through a reversal bend,
e) the rod elements (1) and (2) are respectively provided with clamping blocks (4) that are moveable in a linear manner at the rod elements (1, 2), wherein the clamping blocks are respectively moveable in a linear manner into a position which is required for safe attachment at a bicycle frame or a luggage rack (6).

2. The attachment device according to claim 1, **characterized in that** the clamping unit (3) is integrated into a trailer hitch (5).

## Revendications

1. Dispositif de fixation avec ceux parties de tringlerie (1) et (2) qui sont réunies par une unité de serrage (3),
a) les parties de tringles (1) et (2) sont coulissantes l'une par rapport à l'autre à l'intérieur de l'unité de serrage (3),
**caractérisé en ce que**
b) la distance entre elles peut être adaptée du fait de leur mobilité aux parties portant le dispositif de fixation,
c) les parties de tringlerie (1) et (2) sont munies respectivement de deux entretoises parallèles,
d) la seconde entretoise parallèle est réalisée par une courbe inversée,
e) les parties de tringlerie (1) et (2) sont munies respectivement de deux blocs de serrage (4) coulissant le long des parties de tringlerie (1, 2), blocs qui peuvent être poussés respectivement dans la position favorable pour la fixation sûre sur un cadre de vélo ou un porte bagages (6).

2. Dispositif de fixation selon la revendication 1, **caractérisé en ce que** l'unité de serrage (3) est intégrée à un attelage de remorque.
